# EUROPEAN PATENT APPLICATION

(11) **EP 2 372 494 A1**
(43) Date of publication of application: **05.10.2011**
(21) Application number: 10305201.5
(22) Date of filing: 26.02.2010
(51) Int. Cl.: G06F 1/32

(54) **Method for controlling the power of a data packet processing device and processor power controller using same**

(71) Applicant: Alcatel Lucent, 75008 Paris (FR)
(72) Inventor: Verhulst, Dieter, 9040 St. Amandsberg (BE)
(74) Representative: ALU Antw Patent Attorneys

(57) **Abstract**

A method and a processor power controller (PRM) for controlling the power of a data packet processing device (PPD) adapted to handle data packets received from a data packet buffer (PB). The method consists in measuring the data packet rate or number of data packets received per unit of time in the data packet buffer and in accordingly controlling the processing power of the data packet processing device. This solution avoids that the processing power of the data packet processing device is controlled by the wire rate or the real number of bits that need to be processed.

The single Figure is attached to the abstract.

## Description

The present invention relates to a method for controlling the power of a data packet processing device adapted to handle data packets received from a data packet buffer, said method comprising the step of measuring parameters of the data packets received at said data packet buffer and of accordingly controlling the processing power of said data packet processing device.

Such a method for reducing the power consumption of a data packet processing device is already known in the art.

Today the best known solution for reducing the power consumption of a data packet processing device is to control the idle time of the device, and via the idle time the power of the (at least one) processor included therein.

This solution has a number of drawbacks.

The idle time of the processors included in the data packet processing device is not always available, or a lot of logic needs to be consumed to measure and/or calculate it.

A second drawback is that the idle time is a metric that can be used to lower the processing power, but is not a good metric to take a decision for increasing again the processing and power consumption in case the data packet processing device is operating in low power mode.

An object of the present invention is to provide a method of the above known type but which solves both drawbacks by controlling the power consumption of the data packet processing device in a more efficient way.

According to an embodiment of the invention, this object is achieved due to the fact that said parameters are the data packet rate at which the data packets are received in said data packet buffer.

It is common in a data packet processing device that the processing of the data packets is done packet per packet. This processing is based on the data in the header and not on the data in the payload of the data packet. As a result, the required processing power does not depend on the length of the payload of the data packet.

The throughput of the data packet processing device is however determined by the wire rate (bits per second) of the data packet interface. In other words, the number of data packets per second the data packet processing device needs to process (or handle) depends on the length of the data packets, while the required processing power only depends on the number of data packets per second.

This means that the maximum processing power is only needed for the maximum wire rate and when the data packets have minimum length.

When the data packets get longer or when the wire rate drops the required processing power is lower.

These two criteria are summarized in the data packet rate that is measured as the number of data packets received per unit of time, e.g. per second.

By scaling the processing power to the data packet rate, the data packet processing device will only consume the processing power and thus the electrical power needed.

What is avoided with this solution is that the processing power of the data packet processing device is controlled by the real number of bits that need to be processed.

In case the data packet processing device needs to handle a burst of big data packets, if, as known from prior art, the processing power had been controlled based on that number of data packets, the burst would have lead to an increase of the power consumption. However, this would not help as the required processing power depends on the number of data packets and not on the number of bits they represent.

Another characterizing embodiment is that said method comprises the step of controlling the processing power of said data packet processing device so that a minimal processing power is always provided to said data packet processing device.

Since a minimal processing power is provided anyhow, even when the data packet rate is below a predetermined threshold, the processing power only needs to be increased when the packet buffer starts filling.

In a preferred characterizing embodiment, said method comprises the step of calculating the average length of the data packets in said data packet buffer.

Although this method provides an approximation of the data packet rate, it is preferred because it is fast and not complex to implement.

The approximation is relatively close to the reality because the data packets are processed as fast as possible or back-to-back and thus the length becomes equivalent to the inter-arrival time in the packet buffer.

The method is further particularly, but not exclusively, adapted for high packet rates, i.e. above a predetermined threshold.

Also another characterizing embodiment is that said method comprises the step of taking a shifting average of the inter-arrival time of the data packets in said data packet buffer.

This shifting average can be calculated by keeping, e.g., the last 100 inter-arrival times and by calculating the average over them, using standard averaging techniques.

A variant embodiment is characterized in that said method comprises the step of measuring said inter-arrival time by taking a timestamp each time a data packet arrives in said data packet buffer and by subtracting the timestamp of a previous data packet from the timestamp of the current data packet.

This provides an exact measurement of the data packet rate and is accurate both for low and high packet rates. This method can be deployed if the exact packet rate needs to be monitored anyhow.

Again another characterizing embodiment is that said method comprises the step of changing the operating frequency of a processor in said data packet processing device for controlling said processing power.

In this way, the processing power is reduced by reducing the operating frequency of the cores or processors inside the data packet processing device.

If said data packet processing device comprises a plurality of processors operating in parallel, an embodiment of said method is characterized in comprising the possibility of shutting down a predetermined number of the parallel processors.

When the processing power should be reduced, this shutting down can be performed by clock gating or by full power down of one or more processors working in parallel.

The present invention further also relates to a processor power controller for a processor based architecture, said processor based architecture also comprising a data packet buffer adapted to receive and to latch data packets and a data packet processing device adapted to handle data packets received from said packet buffer, said processor power controller being adapted to measure parameters of the data packets received at said data packet buffer and to accordingly control the processing power of said data packet processing device.

According to a device approach of the present invention, the above object is achieved due to the fact that said processor power controller is adapted to measure, as parameters of the data packets, the data packet rate of the data packets received at said data packet buffer.

In this way, the power consumption of the data packet processing device is controlled by the process power controller as a function of the measured of data packet rate of the data packets arriving at the data packet buffer.

The present processor power controller is further characterized in that it is adapted to operate by using the method for controlling the power of a data packet processing device as mentioned above.

Characterizing embodiments of the present method for controlling the power of a data packet processing device and of the processor power controller using said method are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

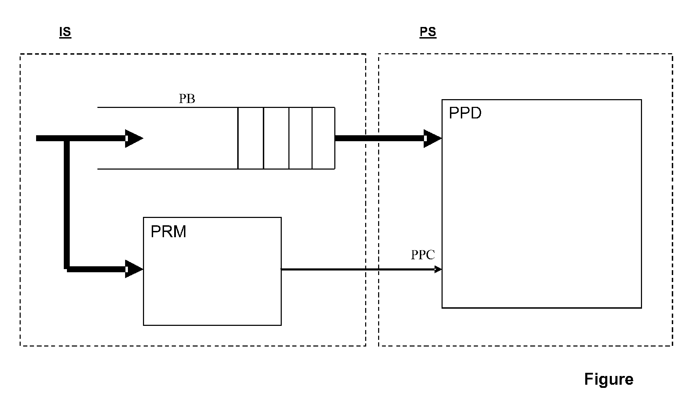

The above and other objects and features of the invention will become more apparent and the invention itself will be best understood by referring to the following description of an embodiment taken in conjunction with the accompanying drawings wherein the single figure represents, according to the invention, a processor power controller PRM for reducing the power consumption of a data packet processing device PPD in a processor based architecture.

The processor based architecture shown at the Figure comprises an input stage IS coupled to a processing stage PS.

The input stage IS has a packet buffer PB adapted to received data packets and associated to a processor power controller PRM able to measure the rate at which the data packets are received in the data packet buffer PB. The data packets are transmitted from the packet buffer PB of the input stage IS to a data packet processing device PPD implemented in the processing stage PS. The data packet processing device PPD is able to handle the data packets received from the packet buffer PB.

The power consumption of the data packet processing device PPD is controlled, as will be explained below, by the processor power controller PRM coupled to the data packet processing device PPD via a processing power control terminal PPC.

In other words, the result of the measurement of the data packet rate or rate at which the data packets are received in the data packet buffer PB is fed forward to the processing stage PS and controls the processing power of the data packet processing device PPD.

The parts of the processor based architecture may obviously have different implementations.

The processor power controller PRM can measure the data packet rate or number of data packets received per unit of time, e.g. per second, in two different ways: exactly or by approximating in the range that is important.

Exact measurement consists in taking a shifting average of the inter-arrival time of the data packets in the data packet buffer PB. Each time a data packet arrives in the data packet buffer PB a timestamp is taken and the timestamp of the previous data packet is subtracted from the current data packet. This gives the inter-arrival time. For instance, the last 100 inter-arrival times are kept and an average is calculated over them using standard averaging techniques.

Actually, accurate information is only needed for high data packet rates, i.e. with small inter-arrival time. Once the data packet rate gets below a certain threshold in the data packet buffer PB, a minimal processing power is maintained anyhow.

In this way, as long as there are only a few data packets in the data packet buffer PB, the processing power of the data packet processing device PPD stays minimal and only needs to be increased when the data packet buffer PB starts filling.

An approximation of the data packet rate can thus been made by calculating the average length of the data packets in the packet buffer PB.

This is because the data packets will be processed as fast as possible or back-to-back and thus the length becomes equivalent to the inter-arrival time.

The processor power controller PRM of the input stage IS can control the processing power of the data packet processing device PPD of the processing stage PS in different ways.

If the data packet processing device PPD comprises a number of processors working in parallel, the processing power can be reduced by shutting down a number of parallel processors or cores, e.g. by clock gating or by full power down.

The processing power can also be reduced by changing the operating frequency of the processors or cores in the data packet processing device PPD.

A final remark is that embodiments of the present invention are described above in terms of functional devices. From the functional description of these devices, given above, it will be apparent for a person skilled in the art of designing electronic devices how embodiments of these devices can be manufactured with well-known electronic components. A detailed architecture of the contents of the functional devices hence is not given.

While the principles of the invention have been described above in connection with specific apparatus, it is to be clearly understood that this description is merely made by way of example and not as a limitation on the scope of the invention, as defined in the appended claims.

## Claims

1. A method for controlling the power of a data packet processing device (PPD) adapted to handle data packets received from a data packet buffer (PB), said method comprising the step of measuring parameters of the data packets received at said data packet buffer and of accordingly controlling the processing power of said data packet processing device,
**characterized in that** said parameters are the data packet rate at which the data packets are received in said data packet buffer (PB).

2. The method according to claim 1, **characterized in that** said data packet rate is measured as a number of data packets received per unit of time (sec).

3. The method according to claim 1, **characterized in that** said method comprises the step of controlling the processing power of said data packet processing device so that a minimal processing power is always provided to said data packet processing device (PPD).

4. The method according to claim 1, **characterized in that** said method comprises the step of calculating the average length of the data packets in said data packet buffer (PB).

5. The method according to claim 1, **characterized in that** said method comprises the step of taking a shifting average of the inter-arrival time of the data packets in said data packet buffer (PB).

6. The method according to claim 5, **characterized in that** said method comprises the step of measuring said inter-arrival time by taking a timestamp each time a data packet arrives in said data packet buffer (PB) and by subtracting the timestamp of the previous data packet from the timestamp of the current data packet.

7. The method according to claim 1, **characterized in that** said method comprises the step of changing the operating frequency of at least one processor included in said data packet processing device (PPD) for controlling said processing power.

8. The method according to claim 1, **characterized in that**, if said data packet processing device (PPD) includes a plurality of processors operating in parallel, said method comprises the possibility of shutting down a predetermined number of processors of said plurality.

9. A processor power controller (PRM) for a processor based architecture, said processor based architecture also comprising a data packet buffer (PB) adapted to receive and to latch data packets and a data packet processing device (PPD) adapted to handle data packets received from said packet buffer,
said processor power controller being adapted to measure parameters of the data packets received at said data packet buffer and to accordingly control the processing power of said data packet processing device,
**characterized in that** said processor power controller (PRM) is adapted to measure, as parameters of the data packets, the data packet rate of the data packets received at said data packet buffer (PB).

10. The processor power controller according to claim 9, **characterized in that** said processor power controller (PRM) is adapted to operate by using the method for controlling the power of a data packet processing device (PPD) as mentioned in any of the claims 1 to 8.

## Amended claims

### Amended claims in accordance with Rule 137(2) EPC.

**1.** A method for controlling the power of a data packet processing device (PPD) adapted to handle data packets received from a data packet buffer (PB), said method comprising the step of measuring parameters of the data packets received at said data packet buffer and of accordingly controlling the processing power of said data packet processing device,
***characterized in that*** said parameters are the data packet rate at which the data packets are received in said data packet buffer (PB),
*and **in that*** said data packet rate is measured as a number of data packets received per unit of time (sec).

**2.** The method according to claim 1,
***characterized in that*** a minimal processing power is always provided to said data packet processing device (PPD),
*and **in that*** said processor power can be increased.

**3.** The method according to claim 1, ***characterized in that*** said method comprises the step of calculating the average length of the data packets in said data packet buffer (PB).

**4.** The method according to claim 1, ***characterized in that*** said method comprises the step of taking a shifting average of the inter-arrival time of the data packets in said data packet buffer (PB).

**5.** The method according to claim 4, ***characterized in that*** said method comprises the step of measuring said inter-arrival time by taking a timestamp each time a data packet arrives in said data packet buffer (PB) and by subtracting the timestamp of the previous data packet from the timestamp of the current data packet.

**6.** The method according to claim 1, ***characterized in that*** said method comprises the step of changing the operating frequency of at least one processor included in said data packet processing device (PPD) for controlling said processing power.

**7.** The method according to claim 1, ***characterized in that**,* if said data packet processing device (PPD) includes a plurality of processors operating in parallel, said method comprises the possibility of shutting down a predetermined number of processors of said plurality.

**8.** A processor power controller (PRM) for a processor based architecture, said processor based architecture also comprising a data packet buffer (PB) adapted to receive and to latch data packets and a data packet processing device (PPD) adapted to handle data packets received from said packet buffer,
said processor power controller being adapted to measure parameters of the data packets received at said data packet buffer and to accordingly control the processing power of said data packet processing device,
***characterized in that*** said processor power controller (PRM) is adapted to measure, as parameters of the data packets, the data packet rate of the data packets received at said data packet buffer (PB),
*and **in that*** said processor power controller (PRM) is adapted to measure said data packet rate as a number of data packets received per unit of time (sec).

**9.** The processor power controller according to claim 8, ***characterized in that*** said processor power controller (PRM) is adapted to operate by using the method for controlling the power of a data packet processing device (PPD) as mentioned in any of the claims 1 to 7.
